# FASCICULE DE BREVET EUROPEEN

(11) **EP 0 896 182 B1**
(45) Date de publication et mention de la délivrance du brevet: **10.04.2002**
(21) Numéro de dépôt: 97112309.6
(22) Date de dépôt: 17.07.1997
(51) Int. Cl.: F16L 37/00, F16L 37/30, F16L 37/32

(54) **Système connecteur**
Steckverbindungssystem
Connector system

(43) Date de publication de la demande: 10.02.1999
(73) Titulaire: INTERLEMO HOLDING S.A., CH-7000 Coire (CH)
(72) Inventeur: Vulliet, Francois, 74200 Allinges (FR)
(74) Mandataire: Kiliaridis, Constantin

(56) Documents cités:
- EP-A- 0 172 996
- WO-A-94/27080
- FR-A- 2 688 291
- GB-A- 806 986
- US-A- 3 918 485
- PATENT ABSTRACTS OF JAPAN vol. 97, no. 4, 30 avril 1997 & JP 08 326978 A (SATO TEKKOSHO:KK), 10 décembre 1996,

## Description

La présente invention a pour objet un système connecteur pour accoupler une conduite de fluide sous pression à une conduite réceptrice dudit fluide, comprenant un corps tubulaire amont apte à être relié à la conduite de fluide sous pression, un corps tubulaire aval enfichable dans le corps tubulaire amont et apte à être relié à la conduite réceptrice, et des moyens de verrouillage de l'enfichage du corps tubulaire aval dans le corps tubulaire amont.

Les systèmes connecteurs de ce type trouvent actuellement de nombreuses applications industrielles et dans le secteur médical, en particulier pour les appareillages medico-dentaires.

Dans ces applications, il est souhaitable de pouvoir réaliser la connexion et l'interruption de la connexion de manière simple et rapide, avec un minimum de précautions et de manipulations.

Des exemples de connecteurs sont connus des documents US-A-3 918 485 et EP-A-0 172 996.

Suivant le type de fluide utilisé, les fuites de fluide qui se produisent à la connexion et à la déconnexion peuvent s'avérer gênantes, par exemple pour des questions d'hygiène ou de sécurité. Et lorsque le système connecteur est destiné à la connexion mixte d'équipements faisant appel à des conduites de fluide et à des conduites électriques, ces fuites peuvent constituer un risque sérieux, aussi bien à la connexion qu'à la déconnexion, sans compter que les éléments de connexion atteints par les fuites doivent être nettoyés, voire reconditionnés, pour pouvoir assurer une reconnexion fiable.

La présente invention a pour but de remédier à ces inconvénients. Elle a également pour but d'offrir un système connecteur simple et facile à réaliser de façon économique.

Le système connecteur selon l'invention est defini par la revendication 1, des formes particulières de réalisation sont définies par les revendications dépendantes.

Grace à l'invention, les seules fonctions d'enfichage du corps tubulaire aval dans le corps tubulaire amont et de retrait dudit corps tubulaire aval du corps tubulaire amont permettent l'ouverture du deuxième obturateur avant celle du premier obturateur et la fermeture du premier obturateur avant celle du deuxième obturateur. Il n'y a pas de surpression à la connexion cependant que le mouvement de déconnexion assure une décharge pilotée du système et son obturation ultérieure. Les risques de fuite sont éliminés. Des variations dans la pression du fluide sous pression sont sans effet sur la fonction contrôlée du système. Le système connecteur assure ainsi sa fonction pour une vaste gamme de pressions du fluide sous pression. La connexion aussi bien que la déconnexion se font sans réactions brutales sur le corps tubulaire amont ou sur le corps tubulaire aval et le verrouillage de l'enfichage peut être simplifié. Toute fausse manoeuvre est impossible et l'absence de fuite fait que le système s'applique particulièrement bien à la connexion mixte de conduites de fluide combinée à celle de conducteurs électriques et/ou à fibres optiques.

Préférablement et dans un concept de réalisation particulièrement simple, les premiers moyens d'appui comprennent un poussoir et une paroi tubulaire fixés au premier obturateur en aval de celui-ci, les deuxièmes moyens d'appui comprennent un poussoir fixé au deuxième obturateur en amont de celui-ci et apte à rencontrer le poussoir fixé au premier obturateur, et les troisièmes moyens d'appui sont constitués par un bord amont du corps tubulaire aval apte à rencontrer la paroi tubulaire aval fixée au premier obturateur, l'agencement relatif de ces moyens d'appui étant tel qu'à l'enfichage du corps tubulaire aval dans le corps tubulaire amont le poussoir fixé au deuxième obturateur rencontre d'abord le poussoir fixé au premier obturateur, puis le bord amont du corps tubulaire aval rencontre la paroi tubulaire fixée au premier obturateur.

Alternativement, les premiers moyens d'appui comprennent un poussoir fixé au premier obturateur en aval de celui-ci, les deuxièmes moyens d'appui comprennent un poussoir fixé au deuxième obturateur en amont de celui-ci et apte à rencontrer le poussoir fixé au premier obturateur, et les troisièmes moyens d'appui comprennent une butée fixée dans le corps tubulaire aval et apte à rencontrer le deuxième obturateur lorsqu'il est éloigné de son siège.

Pour assurer la protection aux agressions extérieures de la commande fonctionnelle du système, le poussoir fixé au premier obturateur a une extrémité aval en retrait d'un bord aval du corps tubulaire amont, et le poussoir fixé au deuxième obturateur a une extrémité amont en retrait d'un bord amont du corps tubulaire aval.

L'étanchéité de l'assemblage des deux corps tubulaires sera avantageusement obtenue par un joint torique placé dans l'extrémité aval du corps tubulaire amont coopérant avec une paroi extérieure de l'extrémité amont du corps tubulaire aval.

Pour une très grande facilité d'utilisation du système connecteur, l'un des corps tubulaires amont et aval est fixé dans une embase pourvue d'un chambrage entourant le corps tubulaire et dans lequel est formée une rainure d'accrochage, l'autre corps tubulaire est fixé dans une fiche apte à être introduite dans le chambrage et pourvue de languettes élastiques à crans d'encliquetage dans la rainure d'accrochage, l'introduction de la fiche dans le chambrage de l'embase jusqu'à prise des crans d'encliquetage dans la rainure d'accrochage déterminant l'enfichage du corps tubulaire aval dans le corps tubulaire amont.

La fiche peut comporter des moyens d'appui mobiles pour contraindre les languettes élastiques contre leur élasticité, pour permettre de dégager sans effort les crans d'encliquetage de la rainure d'accrochage et séparer la fiche de l'embase et par conséquent retirer le corps tubulaire aval du corps tubulaire amont. Dans ce cas, une bague de commande sera préférablement montée mobile longitudinalement sur la fiche, les moyens d'appui mobiles étant reliés à cette bague. La connexion et la déconnexion du système connecteur est lors assurée par une simple opération "push-pull" sur la bague de commande. Le verrouillage de l'enfichage du corps tubulaire aval dans le corps tubulaire amont est d'une rapidité et d'une fiabilité maximales, et la manipulation reste des plus simples même dans un environnement confiné.

Une bague de commande peut aussi être montée mobile longitudinalement sur la fiche, les languettes élastiques étant reliées à cette bague. Dans ce cas, des rampes solidaires de la fiche peuvent forcer les crans d'encliquetage des languettes élastiques dans la rainure d'accrochage de l'embase.

Ces objets et d'autres caractéristiques et avantages de l'invention sont explicités dans la description qui suit donnée en référence aux dessins annexés qui représentent, schématiquement et à titre d'exempte uniquement, deux formes d'exécution préférées mais néanmoins illustratives de l'invention.

Les Figures 1 et 2 sont deux coupes longitudinales des éléments constitutifs de la première forme d'exécution.

Les Figures 3, 4 et 5 sont des coupes longitudinales illustrant le fonctionnement de cette première forme d'exécution.

Les Figures 6 et 7 sont deux coupes longitudinales des éléments constitutifs de la deuxième forme d'exécution.

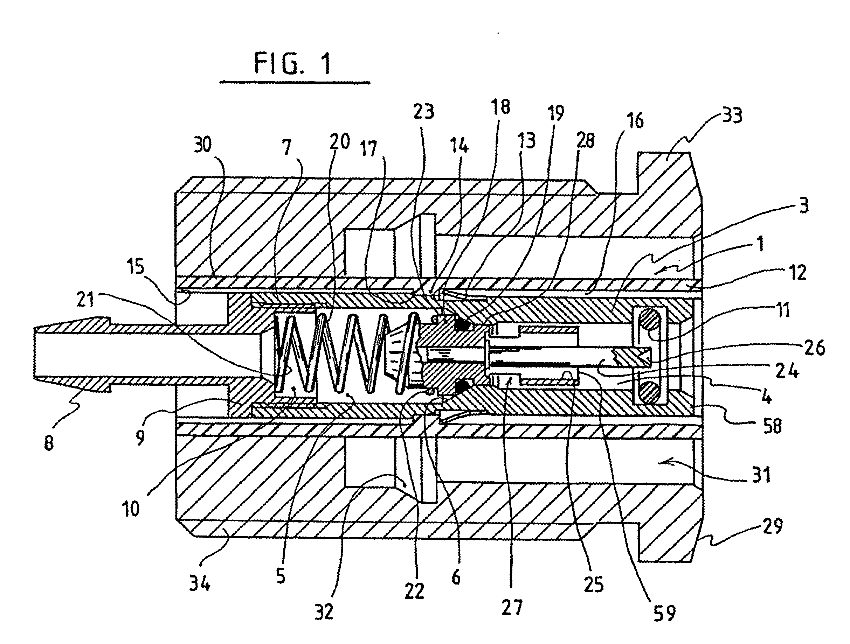

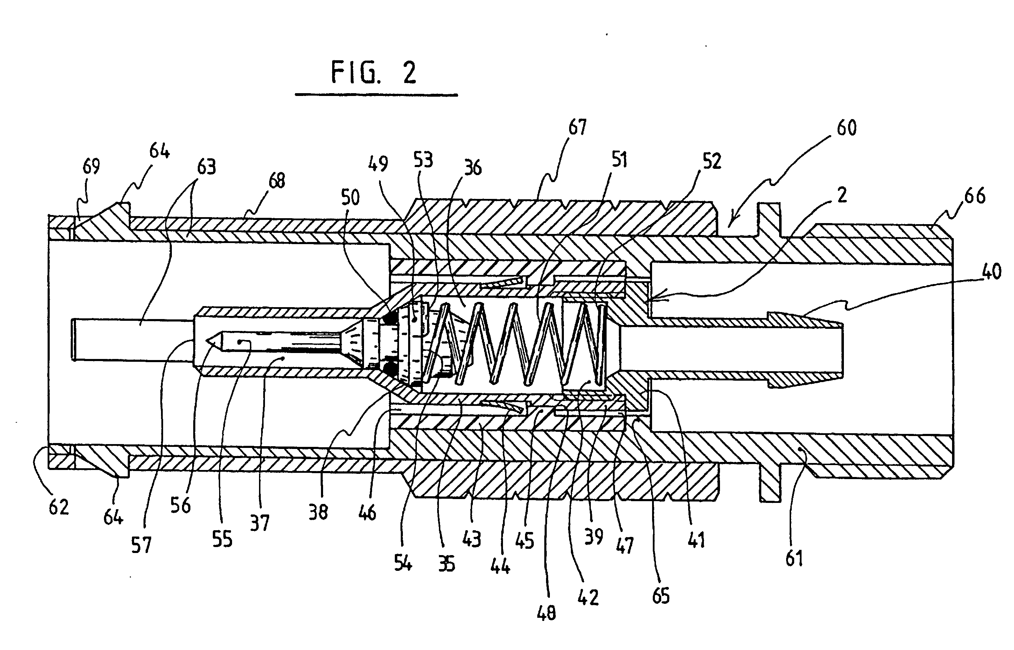

Le système connecteur représenté aux Figures 1 et 2 comprend un corps tubulaire amont 1 et un corps tubulaire aval 2 apte à être enfiché dans le corps tubulaire amont 1.

Le corps tubulaire amont 1 (Figure 1), comprend un cylindre principal 3 comportant une chambre aval 4 et une chambre amont 5 entre lesquelles un épaulement incliné forme un siège 6.

Dans l'extrémité amont 7 de la chambre 5 est vissé un raccord 8 de jonction à une conduite de fluide sous pression (non représentée) et l'extrémité aval 9 de ce raccord forme une cuvette d'appui cylindrique 10. Dans l'extrémité aval de la chambre aval 4 est placé un joint torique 11.

Le cylindre principal 3 est fixé dans un manchon 12, par exemple en matière plastique isolante. La fixation du cylindre principal 3 dans le manchon 12 est assurée par une pluralité de lamelles élastiques 13 fixées sur le pourtour du cylindre principal 3 et prenant appui contre un épaulement intérieur 14 du manchon 12. Des rainures longitudinales 15 et 16 formées à l'intérieur du manchon 12 permettent le passage des lamelles élastiques 13 lors de l'enfilage du cylindre principal 3 dans le manchon 12, et un épaulement de contre-appui 17 formé sur le pourtour du cylindre principal 3 en regard des lamelles 13 assure le blocage de l'épaulement 14 du manchon 12 entre les lamelles 13 et l'épaulement de contre-appui 17.

Dans la chambre amont 5 du cylindre principal 3 est placé un premier obturateur 18 pourvu d'un joint annulaire 19. Le premier obturateur 18, mobile longitudinalement dans la chambre amont 5, est mis en appui contre le siège 6 par l'intermédiaire du joint 19, sous l'action d'une première contrainte élastique constituée par un ressort de compression 20 placé en amont dudit obturateur. Une extrémité amont 21 du ressort 20 est logée dans la cuvette 10 du raccord 8 et une extrémité aval 22 dudit ressort s'appuie sur un épaulement 23 de l'obturateur 18.

Des premiers moyens d'appui solidaires du premier obturateur 18 sont formés par un poussoir 24 et une paroi tubulaire 25 fixés en aval de l'obturateur 18 et s'étendant dans la chambre aval 4 du cylindre principal 3. Le poussoir 24 présente à son extrémité aval un cône d'appui 26 et cette extrémité est en retrait du bord aval 58 de la chambre aval 4 du corps principal 3. La paroi tubulaire 25 est pourvue d'ouvertures transversales amont 27 et son diamètre extérieur est tel qu'elle est apte à coulisser contre une portée cylindrique 28 prévue dans le cylindre principal 3, en aval du siège 6, lorsque l'obturateur 18 est déplacé contre l'action du ressort 20.

Le corps tubulaire amont 1 est logé dans une embase 29 dans laquelle il est fixé par exemple par collage d'une partie amont 30 du manchon 12.

L'embase 29 comprend un chambrage 31 entourant le corps tubulaire amont 1 et dans lequel est formée une rainure d'accrochage 32. L'embase 29 comporte une collerette d'appui 33 et un filetage périphérique 34 par l'intermédiaire desquels elle peut être fixée à un tableau de distribution (non représenté).

Le corps tubulaire aval 2 (Figure 2) comprend un cylindre principal 35 comportant une chambre aval 36 et une chambre amont 37 de diamètre extérieur tel qu'elle peut être enfichée dans la chambre aval 4 du cylindre principal 3 du corps tubulaire amont 1 et s'appuyer contre le joint torique 11 de celle-ci. La jonction des chambres 36 et 37 forme un épaulement incliné constituant un siège 38.

Dans l'extrémité aval 39 de la chambre aval 36 est vissé un raccord 40 de jonction à une conduite réceptrice du fluide sous pression (non représentée) et l'extrémité amont 41 de ce raccord 40 forme une cuvette d'appui cylindrique 42.

Le cylindre principal 35 est fixé dans un manchon 43, par exemple en matière plastique isolante. La fixation du cylindre principal 35 dans le manchon 43 est assurée par des lamelles élastiques 44 fixées sur le pourtour du cylindre principal 35 et prenant appui contre un épaulement intérieur 45 du manchon 43. Des rainures longitudinales 46 et 47 formées à l'intérieur du manchon 43 permettent le passage des lamelles élastiques 44 lors de l'enfilage du cylindre principal 35 dans le manchon 43, et un épaulement de contre-appui 48 formé sur le pourtour du cylindre principal 35 en regard des lamelles élastiques 44 assure le blocage de l'épaulement 45 du manchon 43 entre les lamelles 44 et l'épaulement du contre-appui 48.

Dans la chambre aval 36 du cylindre principal 35 est placé un deuxième obturateur 49 pourvu d'un joint annulaire 50. Le deuxième obturateur 49, mobile longitudinalement dans la chambre aval 36, est mis en appui contre le siège 38 par l'intermédiaire du joint 50, sous l'action d'une deuxième contrainte élastique constituée par un ressort de compression 51 placé en aval de l'obturateur 49. Une extrémité aval 52 du ressort 51 est logée dans la cuvette 42 du raccord 40 et une extrémité amont 53 de ce ressort s'appuie sur un épaulement 54 de l'obturateur 49. Le ressort 51 est de force égale ou inférieure à celle du ressort 20 du premier obturateur 18.

Des deuxièmes moyens d'appui solidaires du deuxième obturateur 49 sont formés par un poussoir 55 fixé au deuxième obturateur 49 en amont de celui-ci et s'étendant dans la chambre amont 37 du cylindre principal 35. Le poussoir 55 a son extrémité amont 56 conique et cette extrémité est en retrait du bord amont 57 de la chambre amont 37 du cylindre principal 35. Le poussoir 55 est apte à rencontrer le poussoir 24 du premier obturateur 18 du corps tubulaire amont 1.

Des troisièmes moyens d'appui solidaires du corps tubulaire aval 2 sont constitués par le bord amont 57 de la chambre amont 37 du cylindre principal 35. Ce bord amont 57 est apte à rencontrer le bord aval 59 de la paroi tubulaire 25 fixée au premier obturateur 18.

L'agencement relatif du poussoir 24 et de la paroi tubulaire 25 solidaires du premier obturateur 18, du poussoir 55 du deuxième obturateur 49, et du bord amont 57 du cylindre principal 35 est tel qu'à l'enfichage du corps tubulaire aval 2 dans le corps tubulaire amont 1, le poussoir 55 rencontre d'abord le poussoir 24, puis le bord amont 57 rencontre le bord aval 59 de la paroi tubulaire 25.

Le corps tubulaire aval 2 est logé dans une fiche 60 apte à être introduite dans le chambrage 31 de l'embase 29.

Cette fiche 60 comprend un corps tubulaire 61 dont l'extrémité amont 62 est découpée pour former des languettes élastiques 63 terminées chacune par un cran d'encliquetage 64. Les languettes élastiques 63 sont ici au nombre de quatre et les crans d'encliquetage 64 sont aptes à prendre dans la rainure d'accrochage 32 de l'embase 29.

Le corps tubulaire aval 2 est fixé dans le corps tubulaire 61, par exemple par collage du manchon 43 en appui contre un épaulement interne 65 du corps 61.

A l'extrémité aval du corps tubulaire 61 est agencé un filetage 66 de fixation d'un poulet (non représenté) de serrage de la conduite réceptrice (non représentée) du fluide sous pression.

Sur le corps tubulaire 61 de la fiche 60 est coulissée une bague de commande 67 pourvue d'un manchon 68 percé d'ouvertures transversales 69 disposées au-dessus des crans d'encliquetage 64 et formant ainsi des appuis mobiles susceptibles de contraindre les crans d'encliquetage 64 et par conséquent les languettes élastiques 63 contre leur élasticité et vers l'intérieur du corps tubulaire 61.

L'agencement du corps tubulaire amont 1 dans l'embase 29 et du corps tubulaire aval 2 dans la fiche 60 est tel que l'introduction de la fiche 60 dans l'embase 29 jusqu'à prise des crans d'encliquetage 64 dans la rainure d'accrochage 32 détermine l'enfichage du corps tubulaire aval 2 dans le corps tubulaire amont 1.

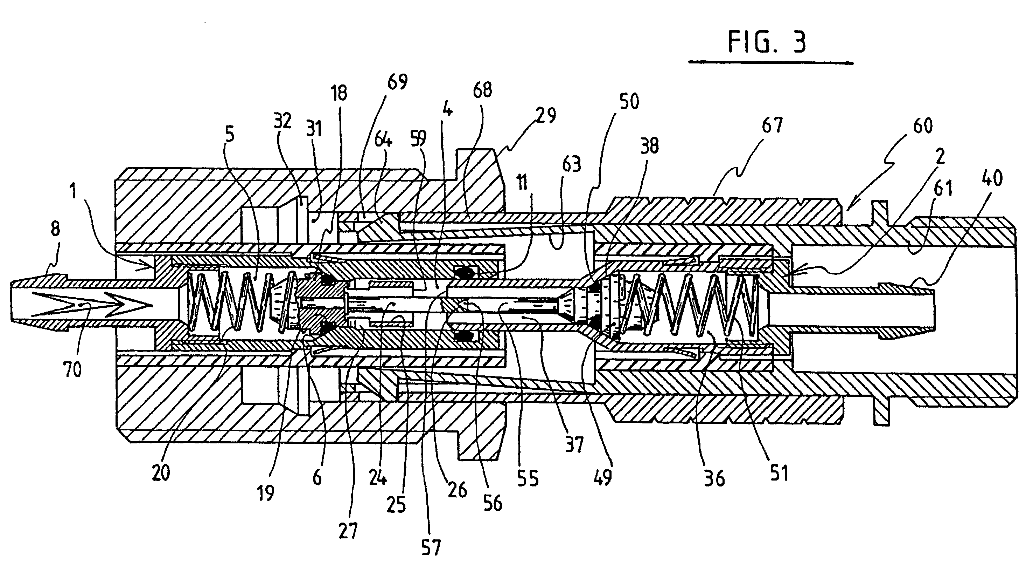

Le fonctionnement du système connecteur décrit est illustré par les Figures 3, 4 et 5.

Le corps tubulaire amont 1 est supposé relié par son raccord 8 à la conduite de fluide sous pression (non représentée) et le corps tubulaire aval 2 est supposé relié par son raccord 40 à la conduite réceptrice (non représentée) dudit fluide. Le sens d'écoulement du fluide sous pression est représenté par la fiche 70.

A l'introduction de la fiche 60 dans l'embase 29 par poussée axiale sur la bague de commande 67 (Figure 3), les crans d'encliquetage 64 sont repoussés par la paroi du chambrage 31 vers l'intérieur du corps tubulaire 61 contre l'élasticité des languettes élastiques 63. Simultanément, la chambre amont 37 du corps tubulaire aval 2 s'enfiche dans la chambre aval 4 du corps tubulaire amont 1 et sa paroi écrase le joint torique 11, assurant l'étanchéité de la jonction des corps tubulaires 1 et 2. Le poussoir 55 du deuxième obturateur 49 vient en contact avec le poussoir 24 du premier obturateur 18, l'extrémité conique 56 pénétrant le cône d'appui 26. A ce stade, le premier obturateur 18 est en appui de son joint 19 contre le siège 6 sous l'action combinée du ressort 20 et de la pression du fluide sous pression agissant dans la chambre amont 5 dans le sens de la flèche 70. Le deuxième obturateur 49 est aussi en appui de son joint 50 contre le siège 38 sous l'action du ressort 51.

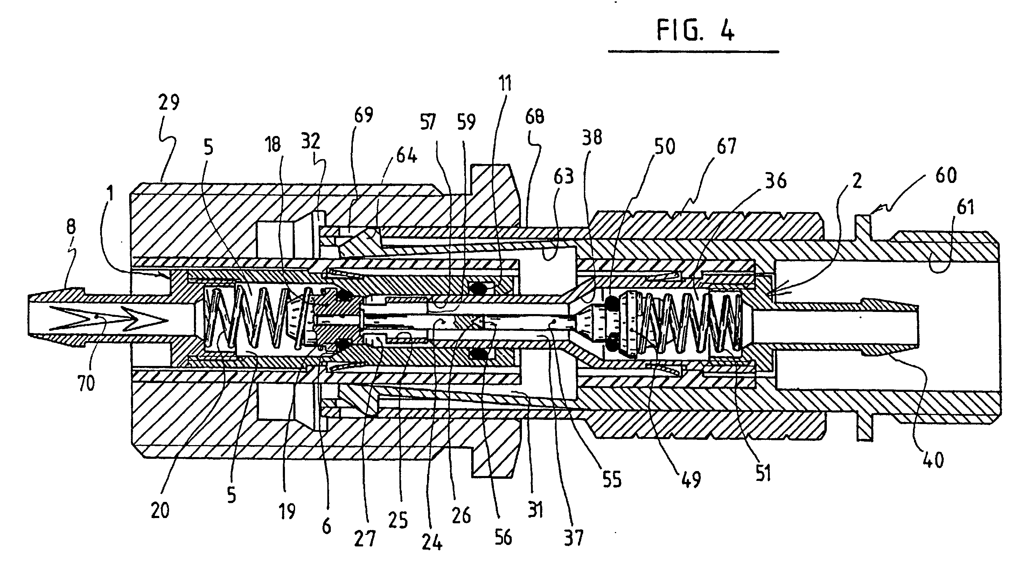

En poursuivant l'introduction de la fiche 60 dans l'embase 29 (Figure 4), le poussoir 24 du premier obturateur 18 repousse le poussoir 55 du deuxième obturateur 49 puisque les ressorts 20 et 51 sont de force égale cependant que le premier obturateur 18 subit la poussée du fluide sous pression dans le sens de la flèche 70 en plus de celle du ressort 20. Le deuxième obturateur 49 est ainsi éloigné du siège 38. Le bord amont 57 de la chambre amont 37 du corps tubulaire aval 2 vient alors en contact avec le bord aval 59 de la paroi tubulaire 25 du premier obturateur 18.

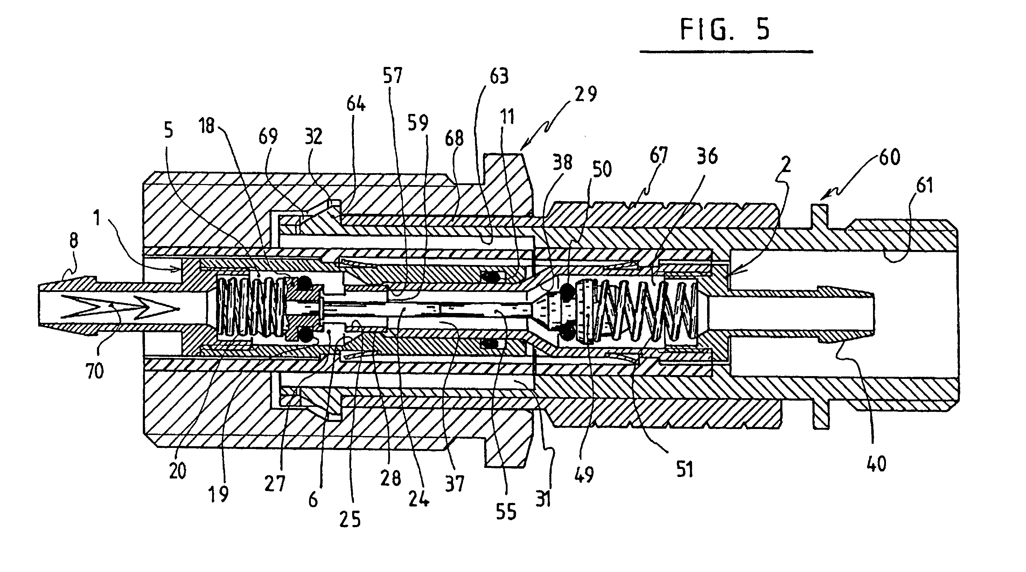

En poursuivant l'introduction de la fiche 60 dans l'embase 29 jusqu'à prise des crans d'encliquetage 64 dans la rainure d'accrochage 32 sous l'action élastique des languettes élastiques 63 (Figure 5), le bord amont 57 du corps tubulaire aval 2 repousse le bord aval 59 de la paroi tubulaire 25 du premier obturateur 18 contre l'action combinée du ressort 20 et de la pression du fluide sous pression selon flèche 70. La paroi tubulaire 25 glisse le long de la portée cylindrique 28 du corps tubulaire amont 1 cependant que le premier obturateur 18 est éloigné du siège 6 contre l'action du ressort 20 et du fluide sous pression. Le fluide sous pression peut alors passer de la chambre amont 5 du corps tubulaire amont 1 à travers la paroi tubulaire 25 via les ouvertures 27, le long de la chambre amont 37 du corps tubulaire aval 2, puis par la chambre aval 36 et le raccord 40 pour atteindre la conduite réceptrice (non représentée).

Pour désaccoupler la conduite de fluide sous pression de la conduite réceptrice, il suffit d'exercer sur la bague de commande 67 une traction en sens opposé à la poussée axiale d'introduction de la fiche 60 dans l'embase 29 pour que les ouvertures 69 du manchon 68 poussent par effet de coin les crans d'encliquetage 64 vers l'intérieur du corps tubulaire 61. Les crans d'encliquetage 64 se dégagent ainsi de la rainure d'accrochage 32 et la fiche 60 peut être retirée de l'embase 29, le retrait de la fiche entraînant le retrait du corps tubulaire aval 2 du corps tubulaire amont 1.

Au cours de ce retrait, le bord amont 57 libère le bord aval 59, ce qui permet le retour du premier obturateur 18 en appui de son joint 19 contre le siège 6 sous l'action combinée du ressort 20 et de la pression du fluide sous pression selon flèche 70, cependant que le deuxième obturateur 49 est maintenu éloigné du siège 38 d'abord par la pression du fluide et par poussée du poussoir 24 contre le poussoir 55, puis par poussée seule du poussoir 24 contre le poussoir 55. Lorsque le retrait se poursuit après fermeture du premier obturateur 18, le poussoir 55 du deuxième obturateur 49 est libéré et le deuxième obturateur peut revenir en appui de son joint 50 contre le siège 38 sous l'action du ressort 51.

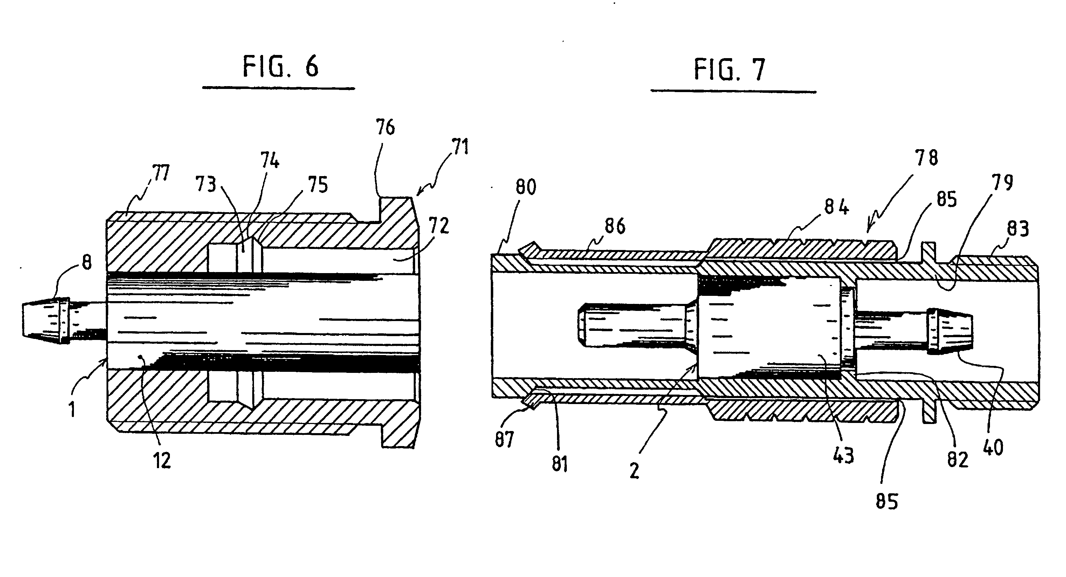

La deuxième forme d'exécution du système connecteur représentée aux Figures 6 et 7 est identique à la première forme d'exécution en ce qui concerne le corps tubulaire amont 1 et le corps tubulaire aval 2 et l'on se réfère à la description qui en est faite ci-dessus.

Le corps tubulaire amont 1 est ici logé dans une embase 71 dans laquelle il est également fixé par collage d'une partie amont de son manchon 12. L'embase 71 comprend un chambrage 72 entourant le corps tubulaire 1 et dans lequel est formée une rainure d'accrochage 73 à parois 74 et 75 inclinées l'une vers l'autre. Comme l'embase de la première forme d'exécution, l'embase 71 comprend une collerette d'appui 76 et un filetage périphérique 77 par le moyen desquels elle peut être fixée à un tableau de distribution (non représenté).

Le corps tubulaire aval est ici logé dans une fiche 78 apte à être introduite dans le chambrage 72 de l'embase 71. Cette fiche comprend un corps tubulaire 79 dont l'extrémité amont 80 porte deux bourrelets à rampe 81 orientée vers l'intérieur du corps tubulaire 79. Le corps tubulaire aval 2 est également fixé dans le corps tubulaire 79, par exemple par collage de son manchon 43 en appui contre un épaulement 82 du corps 79.

A l'extrémité aval du corps tubulaire 79 est agencé un filetage 83 de fixation d'un poulet (non représenté) de serrage de la conduite réceptrice (non représentée) du fluide sous pression.

Sur le corps tubulaire 79 est coulissée une bague de commande 84 pourvue de rainures longitudinales internes 85 permettant son montage par-dessus les bourrelets à rampe 81. La bague de commande 84 est pourvue de languettes élastiques 86 à crans d'encliquetage 87 de forme correspondante à la section de la rainure d'accrochage 73 de l'embase 71.

Le fonctionnement de cette deuxième forme d'exécution est essentiellement le même que celui de la première forme d'exécution des Figures 1 à 5. Une différence réside toutefois dans le fait qu'au désaccouplement, la traction sur la bague de commande 84 fait glisser les crans d'encliquetage 87 le long de la paroi inclinée 75 de la rainure d'accrochage 73, ce qui permet le dégagement des crans pour effectuer le retrait de la fiche. En outre, en cas de traction sur le corps tubulaire 79 lorsque la fiche est accouplée à l'embase, les bourrelets à rampe 81 forcent les crans d'encliquetage 87 dans la rainure d'accrochage 73.

Des variantes sont envisageables sans sortir du cadre de l'invention.

Ainsi, par exemple, les ressorts de compression 20 et 51 pourraient être remplacés par des lames ressort agencées dans les cylindres principaux 3 et 35.

En outre, les premiers, deuxièmes et troisièmes moyens d'appui peuvent être différents en ce sens que les premiers moyens d'appui peuvent comprendre un seul poussoir 24 fixé au premier obturateur 18, les deuxièmes moyens d'appui comprenant le poussoir 55 fixé au deuxième obturateur 49 comme dans l'exemple décrit et apte à rencontrer le poussoir 24 unique fixé au premier obturateur 18, et les troisièmes moyens d'appui comprenant une butée fixée dans la chambre aval 36 du cylindre principal 35 du corps tubulaire aval 2 et apte à rencontrer le deuxième obturateur 49 lorsqu'il est éloigné du siège 38. Cette butée joue ainsi le rôle de la paroi aval 57 du corps tubulaire aval 2 puisqu'elle bloque le deuxième obturateur 49 qui peut alors repousser le premier obturateur 18 par l'intermédiaire du poussoir 55 agissant sur le poussoir 24 du premier obturateur.

Bien que l'invention ait été représentée dans le contexte de l'accouplement d'une seule conduite de fluide sous pression à une seule conduite réceptrice, il est bien entendu qu'elle s'applique aussi à l'accouplement simultané d'une pluralité de conduites de fluides sous pression à un nombre correspondant de conduites réceptrices et donc d'une pluralité de corps tubulaires amont et aval, s'il y a lieu en parallèle avec une ou des conduites électriques et/ou à fibres optiques arrangées dans un seul groupe embase/fiche tel que décrit ci-dessus.

Enfin, l'embase 29 ou 71 peut être réalisée pour une utilisation sans fixation à un tableau de distribution, de même que l'embase peut être solidaire du corps tubulaire aval, cependant que la fiche est solidaire du corps tubulaire amont.

D'autres systèmes de verrouillage de l'enfichage du corps tubulaire aval dans le corps tubulaire amont peuvent également être utilisés, par exemple un étrier mobile solidaire de l'un des éléments embase ou fiche coopérant avec un appui ou une rainure de retenue solidaire de l'autre élément fiche ou embase; dans ce cas, les éléments embase et fiche pourraient même être supprimés, l'étrier et l'appui ou la rainure étant respectivement directement solidaires des corps tubulaires amont et aval.

## Revendications

1. Système connecteur pour accoupler une conduite de fluide sous pression à une conduite réceptrice dudit fluide, comprenant un corps tubulaire amont (1) apte à être relié à la conduite de fluide sous pression, un corps tubulaire aval (2) enfichable dans le corps tubulaire amont et apte à être relié à la conduite réceptrice, et des moyens de verrouillage (29, 60, 71, 78) de l'enfichage du corps tubulaire aval dans le corps tubulaire amont, comprenant un premier obturateur (18) logé dans le corps tubulaire amont (1) et en appui contre un siège (6) de celui-ci sous l'action d'une première contrainte élastique (20) en amont de ce premier obturateur, un deuxième obturateur (49) logé dans le corps tubulaire aval (2) et en appui contre un siège (38) de celui-ci sous l'action d'une deuxième contrainte élastique (51) en aval de ce deuxième obturateur, des premiers moyens d'appui (24) solidaires du premier obturateur (18) coopérant avec des deuxièmes moyens d'appui (55) solidaires du deuxième obturateur (49) pour, lorsque les corps tubulaires (1, 2) sont respectivement reliés à la conduite de fluide sous pression et à la conduite réceptrice et que le corps tubulaire aval (2) est enfiché dans le corps tubulaire amont (1), éloigner séquentiellement de leurs sièges respectifs le deuxième obturateur (49) contre l'action de la deuxième contrainte élastique (51) puis le premier obturateur (18) contre l'action de la première contrainte élastique (20) et du fluide sous pression, et au cours du retrait du corps tubulaire aval (2) du corps tubulaire amont (1), laisser revenir séquentiellement contre leurs sièges respectifs le premier obturateur (18) sous l'action combinée de la première contrainte élastique (20) et du fluide sous pression puis le deuxième obturateur (49) sous l'action de la deuxième contrainte élastique, (51), **caractérisé par le fait que** la deuxième contrainte élastique est au plus égale à la première, que les premiers moyens d'appui comprennent un poussoir (24) et une paroi tubulaire (25) fixés au premier obturateur (18) en aval de celui-ci, les deuxièmes moyens d'appui comprennent un poussoir (55) fixé au deuxième obturateur (49) en amont de celui-ci et apte à rencontrer le poussoir (24) fixé au premier obturateur (18), que des troisièmes moyens d'appui sont prévus constitués par un bord amont (57) du corps tubulaire aval (2) apte à rencontrer la paroi tubulaire (25) fixée au premier obturateur (18) l'agencement relatif de ces moyens d'appui étant tel qu'à l'enfichage du corps tubulaire aval (2) dans le corps tubulaire amont (1) le poussoir (55) fixé au deuxième obturateur (49) rencontre d'abord le poussoir (24) fixé au premier obturateur (18), puis le bord amont (57) du corps tubulaire aval (2) rencontre la paroi tubulaire (25) fixée au premier obturateur (18).

2. Système connecteur selon la revendication 1, dans lequel le poussoir fixé (24) au premier obturateur (18) à une extrémité aval (26) en retrait d'un bord aval (58) du corps tubulaire amont (1), et le poussoir (55) fixé au deuxième obturateur (49) a une extrémité amont (56) en retrait d'un bord amont (57) du corps tubulaire aval (2).

3. Système connecteur selon l'une des revendications 1 à 2, dans lequel un joint torique (11) placé dans l'extrémité aval (4) du corps tubulaire amont (1) coopère avec une paroi extérieure de l'extrémité amont (37) du corps tubulaire aval (2).

4. Système connecteur selon l'une des revendications 1 à 3, dans lequel l'un des corps tubulaires amont et aval (1, 2) est fixé dans une embase (29, 71) pourvue d'un chambrage (31, 72) entourant le corps tubulaire (1, 2) et dans lequel est formée une rainure d'accrochage (32, 73), l'autre corps tubulaire (1, 2) est fixé dans une fiche (60, 78) apte à être introduite dans le chambrage (31, 72) et pourvue de languettes élastiques (63, 86) à crans d'encliquetage (64, 87) dans la rainure d'accrochage, l'introduction de la fiche dans le chambrage de l'embase jusqu'à prise des crans d'encliquetage dans la rainure d'accrochage déterminant l'enfichage du corps tubulaire aval (2) dans le corps tubulaire amont (1).

5. Système connecteur selon la revendication 4, dans lequel la fiche (60) comporte des moyens d'appui mobiles (69) pour contraindre les languettes élastiques (63) contre leur élasticité.

6. Système connecteur selon la revendication 5, dans lequel une bague de commande (67) est montée mobile longitudinalement sur la fiche (60), les moyens d'appui mobiles (69) étant reliés à cette bague (67).

7. Système connecteur selon la revendication 4, dans lequel une bague de commande (84) est montée mobile longitudinalement sur la fiche (78), les languettes élastiques (86) étant reliées à cette bague (84).

8. Système connecteur selon la revendication 7, dans lequel des rampes (81) solidaires de la fiche (78) forcent les crans d'encliquetage (87) des languettes élastiques (86) dans la rainure d'accrochage (73) de l'embase (71).

## Claims

1. Connector system for coupling a pressurize-fluid line to a line for receiving the said fluid, comprising an upstream tubular body (1) capable of being connected to the pressurized-fluid line, a downstream tubular body (2) that can be plugged into the upstream tubular body and is capable of being connected to the receiving line, and means (29, 60, 71, 78) for locking the downstream tubular body plugged into the upstream tubular body, comprising a first shutter (18) housed in the upstream tubular body (1) and bearing against a seat (6) thereof under the action of a first elastic stress (20) upstream of the first shutter, a second shutter (49) housed in the downstream tubular body (2) and bearing against a seat (38) thereof under the action of a second elastic stress (51) downstream of this second shutter, first bearing means (24) secured to the first shutter (18) interacting with second bearing means (55) secured to the second shutter (49), so that when the tubular bodies (1, 2) are connected respectively to the pressurized-fluid line and to the receiving line, and when the downstream tubular body (2) is plugged into the upstream tubular body (1), the second shutter (49) then the first shutter (18) are moved in tum off their respective seats, the second shutter (49) against the action of the second elastic stress (51) and the first shutter (18) against the action of the first elastic stress (20) and of the pressurized fluid, and so that as the downstream tubular body (2) is withdrawn from the upstream tubular body (1), the first shutter (18) then the second shutter (49) are allowed to return in turn against their respective seats, the first shutter (18) under the combined action of the first elastic stress (20) and of the pressurized fluid, and the second shutter (49) under the action of the second elastic stress (51).
**characterised in that** the second elastic stress is at most equal to the first elastic stress, **in that** the first bearing means comprise a push-rod (24) and a tubular wall (25) fixed to the first shutter (18) downstream thereof, the second bearing means comprise a push-rod (55) fixed to the second shutter (49) upstream thereof and capable of encountering the push rod (24) fixed to the frst shutter (18), and third bearing means are provided comprised of an upstream edge (57) of the downstream tubular body (2) capable of encountering the tubular wall (25) fixed to the first shutter (18), the relative arrangement of these bearing means being such that as the downstream tubular body (2) is plugged into the upstream tubular body (1), the push-rod (55) fixed to the second shutter (49) first of all encounters the push-rod (24) fixed to the first shutter (18), then the upstream edge (57) of the downstream tubular body (2) encounters the tubular wall (25) fixed to the first shutter (18).

2. Connector system according to Claim 1, in which the push-rod (24) fixed to the first shutter (18) has a downstream end (26) set back from a downstream edge (58) of the upstream tubular body (1), and the pushrod (55) fixed to the second shutter (49) has an upstream end (56) set back from an upstream edge (57) of the downstream tubular body (2).

3. Connector system according to one of Claims 1 to 2, in which an O-ring seal (11) placed in the downstream end (4) of the upstream tubular body (1) interacts with an outer wall of the upstream end (37) of the downstream tubular body (2).

4. Connector system according to one of Claims 1 to 3, in which one of the upstream and downstream tubular bodies (1, 2) is fixed into a socket (29, 71) provided with a counterbore (31, 72) surrounding the tubular body (1, 2) and in which a catching groove (32, 73) is formed, the other tubular body (1, 2) is fixed into a plug (60, 78) capable of being introduced into the counterbore (31, 72) and provided with elastic tabs (63, 86) with teeth (64, 87) for clipping into the catching groove, the introduction of the plug into the counterbore of the socket until the teeth clip into the catching groove determining the plugging of the downstream tubular body (2) into the upstream tubular body (1).

5. Connector system according to Claim 4, in which the plug (60) comprises bearing means (69) that can be moved in order to stress stressing the elastic tabs (63) against their elasticity.

6. Connector system according to Claim 5, in which an operating ring (67) is mounted so that it can move longitudinally along the plug (60), the moving bearing means (69) being connected to this ring (67).

7. Connector system according to Claim 4, in which an operating ring (84) is mounted so that it can move longitudinally along the plug (78), the elastic tabs (86) being connected to this ring (84).

8. Connector system according to claim 7, in which ramps (81) secured to the plug (78) force the clip-in teeth (87) of the elastic tabs (86) into the catching groove (73) in the socket (71).

## Patentansprüche

1. Verbindungssystem zum Anschliessen einer Hochdruckfluidleitung an eine Aufnahmeleitung für dieses Fluid, mit einem stromaufwärtsseitigen röhrenförmigen Körper (1), der an die Hochdruckfluidleitung anschliessbar ist, mit einem stromabwärtsseitigen röhrenförmigen Körper (2), der in den stromaufwärtsseitigen Körper einsteckbar und an die Aufnahmeleitung anschliessbar ist, und mit Verriegelungsmitteln (29,, 60, 71, 78) zum Verriegeln der Steckverbindung des stromabwärtsseitigen röhrenförmigen Körpers mit dem stromaufwärtsseitigen röhrenförmigen Körper, mit einem ersten Verschluss (18), der im stromaufwärtsseitigen röhrenförmigen Körper (1) angeordnet ist und auf einem Sitz (6) desselben unter der Wirkung einer ersten elastischen Spannung ((20), stromaufwärts dieses ersten Verschlusses, aufliegt, mit einem zweiten Verschluss (49), der im stromäbwärtsseitigen röhrenförmigen Körper (2) angeordnet ist und auf einem Sitz (38) desselben unter der Wirkung einer zweiten elastischen Spannung (51), stromabwärts dieses zweiten Verschlusses, aufliegt, mit ersten Auflagemitteln (24), welche fest am ersten Verschluss (18) angebracht sind und mit zweiten Auflagemitteln (55) zusammenwirken, die fest am zweiten Verschluss (49) angebracht sind, damit, wenn die röhrenförmigen Körper (1, 2) an die Hochdruckfluidleitung bzw. an die Aufnahmeleitung angeschlossen werden und der stromabwärtsseitige röhrenförmige Körper (2) in den stromaufwärtsseitigen röhrenförmigen Körper (1) eingesteckt wird, nacheinander der zweite Verschluss (49) gegen die Wirkung der zweiten elastischen Spannung (51) und dann der erste Verschluss (18) gegen die Wirkung der ersten elastischen Spannung (20) und des Hochdruckfluids von ihren entsprechenden Sitzen entfernt werden, und damit sich beim Herausziehen des stromabwärtsseitigen röhrenförmigen Körpers (2) aus dem stromaufwärtsseitigen röhrenförmigen Körper (1) nacheinander der erste Verschluss (18) unter der kombinierten Wirkung der ersten elastischen Spannung und des Hochdruckfluids und dann der zweite Verschluss (49) unter der Wirkung der zweiten elastischen Spannung (51) gegen ihre entsprechenden Sitze zurückbewegen können, **dadurch gekennzeichnet, dass** die zweite elastische Spannung höchstens gleich der ersten ist, dass die ersten Auflagemittel einen Stössel (24) und eine rohrförmige Wand (25) aufweisen, die fest am ersten Verschluss (18), stromabwärts desselben, befestigt sind, dass die zweiten Auflagemittel einen Stössel (55) aufweisen, der am zweiten Verschluss (49), stromaufwärts desselben, befestigt ist und gegen den am ersten Verschluss (18) befestigten Stössel (24) stossen kann, dass dritte Auflagemittel vorgesehen sind, welche von einem stromaufwärtsseitigen Rand (57) des stromabwärtsseitigen röhrenförmigen Körpers, (2) gebildet werden, welcher Rand gegen die am ersten Verschluss (18) befestigte rohrförmige Wand (25) stossen kann, wobei diese Auflagemittel derart angeordnet sind, dass beim Einstecken des stromabwärtsseitigen röhrenförmigen Körpers (2) in den stromaufwärtsseitigen röhrenförmigen Körper (1) der am zweiten Verschluss (49) befestigte Stössel (55) zunächst gegen den am ersten Verschluss (18) befestigten Stössel (24) und dann der stromaufwärtsseitige Rand (57) des stromabwärtsseitigen röhrenförmigen Körpers (2) auf die am ersten Verschluss (18) befestigte rohrförmige Wand (25) stösst.

2. Verbindungssystem nach Anspruch 2, bei welchem der am ersten Verschluss (18) befestigte Stössel (24) ein stromabwärtsseitiges Ende (26) aufweist, das gegenüber einem stromabwärtsseitigen Rand (58) des stromaufwärtsseitigen Körpers (1) zurückversetzt ist.

3. Verbindungssystem nach einem der Ansprüche 1 bis 2, bei welchem ein im stromabwärtsseitigen Ende (4) des stromaufwärtsseitigen Körpers (1) angeordneter O-Ring (11) mit einer stromaufwärtsseitigen äusseren Wand (37) des stromabwärtsseitigen Körpers (2) zusammenwirkt.

4. Verbindungssystem nach einem der Ansprüche 1 bis 3, bei welchem einer der stromaufwärts- und stromabwärtsseitigen röhrenförmigen Körper (1, 2) in einem rohrförmigen Gehäuse (29) befestigt ist, welches einen den röhrenförmigen Körper (1, 2) umgebenden Hohlraum (31, 72) hat, dessen Innenwand eine Rastnut (32, 73) aufweist, und der andere röhrenförmige Körper (1, 2) in einem Stecker (60, 78) befestigt ist, der in den Hohlraum (31, 72) eingeführt werden kann und welcher mit elastischen Zungen (63, 86) mit in die Rastnut einschnappenden Sperrklinken (64, 87) versehen ist, wobei die Einführung des Steckers in den Hohlraum des Gehäuses bis zum Einschnappen der Sperrklinken in die Rastnut die Herstellung der Steckverbindung des stromabwärtsseitigen Körpers (2) mit dem stromaufwärtsseitigen Körper (1) bestimmt.

5. Verbindungssystem nach Anspruch 4, bei welchem der Stecker (60) bewegliche Andruckmittel (69) hat, um die elastischen Zungen (63) gegen ihre Elastizität zu belasten.

6. Verbindungssystem nach Anspruch 5, bei welchem ein Betätigungsring (67) längsbeweglich auf dem Stecker (60) montiert ist und die beweglichen Andruckmittel (69) mit diesem Ring (67) verbunden sind.

7. Verbindungssystem nach Anspruch 4, bei welchem ein Betätigungsring (84) längsbeweglich auf dem Stecker (78) montiert ist und die elastischen Zungen (86) mit diesem Ring (84) verbunden sind.

8. Verbindungssystem nach Anspruch 7, bei welchem am Stecker (78) fest angebrachte Rampen (81) die Sperrklinken (87) der elastischen Zungen (86) in die Rastnut (73) des Gehäuses (71) drücken.
